# EUROPEAN PATENT APPLICATION

(11) **EP 4 787 477 A1**
(43) Date of publication of application: **05.08.2026**
(21) Application number: 24871646.6
(22) Date of filing: 26.08.2024
(51) Int. Cl.: H01M 4/505, C01G 45/00, H01M 4/525

(54) **POSITIVE ELECTRODE ACTIVE MATERIAL FOR SECONDARY BATTERY, AND SECONDARY BATTERY**

(30) Priority: 29.09.2023 JP 2023170654
(71) Applicant: Panasonic Intellectual Property Management Co., Ltd., Kadoma-shi, Osaka 571-0057 (JP)
(72) Inventor: ZHANG, Jin, Kadoma-shi, Osaka 571-0057 (JP); HIBINO, Mitsuhiro, Kadoma-shi, Osaka 571-0057 (JP); NAKURA, Kensuke, Kadoma-shi, Osaka 571-0057 (JP)
(74) Representative: Novagraaf International SA
(86) International application number: PCT/JP2024/030288
(87) International publication number: WO 2025/069845

(57) **Abstract**

A positive electrode active material for secondary batteries contains a lithium metal composite oxide having a crystal structure assignable to space group Fm-3m. The lithium metal composite oxide contains Li and a cationic element M different from Li. The cationic element M includes at least Mn and Co. Mn accounts for 50 at% or more of the cationic element M.

## Description

### [Cross Reference to Related Application]

The present application is based on and claims priority under 35 U.S.C. §119 to Japanese Patent Application No. 2023-170654, filed on September 29, 2023, of which entire content is incorporated herein by reference into the present application.

### [Technical Field]

The present disclosure relates to a positive electrode active material for secondary batteries and a secondary battery.

### [Background Art]

Secondary batteries, especially lithium-ion secondary batteries, are expected as power sources for small consumer applications, power storage devices, and electric vehicles due to their high output power and high energy density. As positive electrode active materials for the lithium-ion secondary batteries, composite oxides of lithium and a transition metal (e.g., cobalt) are used. Replacement of a portion of the cobalt with nickel can achieve higher capacity.

In recent years by contrast, in response to the demand for high energy density, Li-excess lithium metal composite oxides based on Li₁₊ₓMn₁₋ₓO₂ having a rock-salt structure have attracted attention.

Patent Literature 1 discloses a positive electrode active material containing a lithium transition metal composite oxide having a crystal structure belonging to space group Fm-3m and represented by the compositional formula Li₁₊ₓNb_{y}Me_{z}AₚO₂ (where Me is a transition metal including Fe and/or Mn, 0 < x < 1, 0 < y < 0.5, 0.25 ≤ z < 1, A is an element other than Nb and Me, and 0 ≤ p ≤ 0.2, except for Ll₁₊ₚFe_{1-q}Nb_{q}O₂ where 0.15 < p ≤ 0.3 and 0 < q ≤ 0.3).

### [Citation List]

### [Patent Literature]

[Patent Literature 1] Japanese Patent No. 6197029

### [Summary of Invention]

### [Technical Problem]

Patent Literature 1 makes it possible to achieve high capacity through compositional control (i.e., addition of Nb). However, the effect of capacity increase is insufficient, and there is still room for improvement.

### [Solution to Problem]

In view of the foregoing, one aspect of the present disclosure relates to a positive electrode active material for secondary batteries containing a lithium metal composite oxide having a crystal structure assignable to space group Fm-3m, wherein the lithium metal composite oxide contains Li and a cationic element M different from Li, the cationic element M includes at least Mn and Co, and Mn accounts for 50 at% or more of the cationic element M.

Another aspect of the present disclosure relates to a secondary battery including: a positive electrode; a negative electrode; an electrolyte; and a separator provided between the positive electrode and the negative electrode, wherein the positive electrode contains the aforementioned positive electrode active material for secondary batteries.

### [Advantageous Effects of Invention]

According to the present disclosure, a secondary battery with high energy density can be realized.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

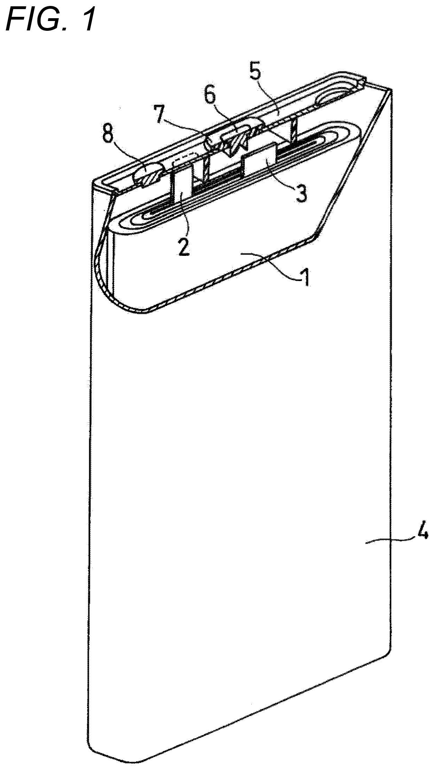

[FIG. 1] FIG. 1 is a schematic partially cutaway perspective view of a secondary battery according to an embodiment of the present disclosure.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type of them may be selected and used singly, or two or more types of them may be used in combination.

Also, the present disclosure encompasses combinations of matters described in two or more claims arbitrarily selected from multiple claims described in the appended claims. That is, as long as no technical contradiction arises, it is possible to combine matters described in two or more claims arbitrarily selected from multiple claims described in the appended claims.

In the following description, the word "comprise" (or "include") is an expression including meanings of "comprise (or include)", "essentially consist of", and "consist of".

Secondary batteries include at least lithium-ion batteries, nonaqueous electrolyte secondary batteries such as lithium-metal secondary batteries, and all-solid-state batteries using solid electrolytes, for example.

A positive electrode active material for secondary batteries according to an embodiment of the present disclosure includes a lithium metal composite oxide (hereinafter also referred to as a "lithium metal composite oxide (Fm)") having a crystal structure assignable to space group Fm-3m. The lithium metal composite oxide (Fm) has a crystal structure based on, for example, the rock-salt structure belonging to space group Fm-3m, and has a crystal structure similar to the rock-salt structure typified by, for example, NaCl. In a crystal structure such as above, oxygen atoms are arranged at anion sites and Li atoms and atoms of a metal other than Li can be arranged irregularly at cation sites.

The lithium metal composite oxide (Fm) may be an oxide having a rock-salt structure based on a composite oxide of Li and Mn. The lithium metal composite oxide (Fm) can be a Li-excess type lithium metal composite oxide based on Li₁₊ₓMn₁₋ₓO₂ having a rock-salt structure. Note that the Li-excess state refers to a state in which the number of atoms of Li in the lithium metal composite oxide (Fm) is larger than the total number of atoms of the metal elements other than Li.

The crystal structure of the lithium metal composite oxide (Fm) can be identified, for example, from the X-ray diffraction pattern measured using X-ray powder diffractometer (e.g., an X-ray diffractometer manufactured by Rigaku Corporation).

The lithium metal composite oxide (Fm) according to an embodiment of the present disclosure contains Li and a cationic element M different from Li. The total amount of all metal elements contained in the lithium metal composite oxide (Fm) corresponds to the sum of the total amount of Li and the total amount of the cationic element M in the lithium metal composite oxide (Fm). The cationic element M includes at least Mn and Co. Mn is the main component of the cationic element M, and accounts for 50 at% or more of the cationic element M.

The ratio (mLi/mMn) of the number mLi of atoms of Li in the lithium metal composite oxide (Fm) to the number mMn of atoms of Mn in the lithium metal composite oxide (Fm) preferably satisfies 1.7 ≤ mLi/mM ≤ 2.5, and more preferably satisfies 1.8 ≤ mLi/mM ≤ 2.3.

The cationic element M may further include an element Mm in addition to Mn and Co. The element Mm is a cationic element other than Li, Mn, and Co. The term "cationic element" refers to an element that can form a cation other than hydrogen and is typically a metal element (including a so-called metalloid element).

The ratio mMn/(mCo + mMm) is, for example, 1 or more and 15 or less where mMn represents the number of atoms of Mn in the lithium metal composite oxide (Fm), mCo represent the number of atoms of Co in the lithium metal composite oxide (Fm), and mMm represents the number of atoms of the cationic element Mm other than Li, Mn, and Co in the lithium metal composite oxide (Fm). It is preferably 1 or more and 12 or less, and may be larger than 1 and 12 or less, or 2 or more and 12 or less.

Co can stabilize the crystal structure based on the rock-salt structure belonging to space group Fm-3m and has an effect of increasing the capacity of the lithium metal composite oxide (Fm). By allowing coexistence of Mn and Co, charge-discharge efficiency can be significantly improved and high energy density can be achieved. The reason thereof is not clear, but it is possible that electronic conductivity is increased at the microscopic level because trivalent Co has many vacant orbitals in the e_g orbitals in a low-spin state and can be used for electron hopping between e_g orbitals of trivalent Mn. When the lithium metal composite oxide (Fm) contains Co, the ratio (mMn/mCo) of the number mMn of atoms of Mn in the lithium metal composite oxide to the number mCo of atoms of Co in the lithium metal composite oxide is for example, 5 to 65, and may be 5.5 to 60, or 10 to 50.

The element Mm may include at least one selected from the group consisting of Ti, Fe, Ge, Si, Ga, Ni, Sn, Cu, Nb, Mo, Bi, V, Cr, Y, Zr Zn, Na, K, Ca, Mg, Pt, Au, Ag, Ru, Ta, W, La, Ce, Pr, Gd, Sm, Eu, Yb, Dy, Al, and Er. Among these, the element Mm is preferably at least one selected from the group consisting of Ti, Mg, Fe, Nb, and Ni in view of ease of formation of a rock-salt-type crystal structure. At least one selected from the group consisting of Ti, Mg, and Fe preferably accounts for 50 at% or more of Mm, or even 80 at% or more or 100%.

Among the elements Mm, Ti is particularly preferable, and 50 at% or more, even 80 at% or more, or 100% of Mm may be Ti. Ti can stabilize the crystal structure based on the rock-salt structure belonging to space group Fm-3m and has an effect of increasing the capacity of the lithium metal composite oxide (Fm).

By allowing coexistence of Mn, Co, and Ti, the charge-discharge efficiency is significantly improved and a high energy density can be achieved. The reason for the above is not clear, but one possible reason as one cause may be that in a lithium metal composite oxide, Ti can exist in the form of Ti⁴⁺ with an empty d orbital and Co can exist in the form of Co⁴⁺ with an empty e_g orbital. In this case, it is considered that a highly symmetrical rock-salt structure is likely to be stabilized and the rock-salt structure can remain stable even after repetition of charge and discharge cycles.

The ratio (mMn/mTi) of the number mMn of atoms of Mn in the lithium metal composite oxide (Fm) to the number mTi of atoms of Ti in the lithium metal composite oxide (Fm) may be 2 or more, 3 or more, or 4 or more, and is preferably 5 or more. By contrast, mMn/mTi may be 70 or less, 30 or less, or 15 or less, and is desirably 7 or less. The range of mMn/mTi may be, for example, 2 to 30, 2 to 15, or 2 to 7.

The ratio (mTi/mCo) of the number mTi of atoms of Ti in the lithium metal composite oxide to the number mCo of atoms of Co in the lithium metal composite oxide is preferably 1 to 3.

The capacity of the lithium metal composite oxide (Fm) can be increased by controlling the ratio (mLi/mM) of the number mLi of atoms of Li in the lithium metal composite oxide (Fm) to the number mM of atoms of the cationic element M in the lithium metal composite oxide. Specifically, a high capacity can be achieved when 1.2 ≤ mLi/mM ≤ 2.0 is satisfied. Further, it is preferable to satisfy 1.2 ≤ mLi/mM ≤ 1.8, more preferable to satisfy 1.3 ≤ mLi/mM ≤ 1.7, and still more preferable to satisfy 1.4 ≤ mLi/mM ≤ 1.6.

The lithium metal composite oxide (Fm) may contain fluorine (F). Fluorine can be substituted by an oxygen atom at the anion sites in the above-described crystal structure. This stabilizes the Li-excess state, resulting in higher capacity. Additionally, the substitution of fluorine atoms increases the average discharge potential.

In the lithium metal composite oxide (Fm), the arrangement of Li at the cation sites is irregular and the bonding states of Li vary, resulting in a wide distribution of voltage associated with Li release. Therefore, it can be difficult to utilize the tail of the voltage distribution on the low-potential side as capacity. However, the introduction of fluorine atoms shifts the distribution of voltage associated with Li release toward the high-potential side, making it easy to utilize the tail as capacity. As a result, the available capacity is further increased.

The lithium metal composite oxide (Fm) can be represented by the compositional formula LiₐMn_{b}Co_{c}Mm_{d}OₑF_{f}, for example. In this case, it is preferable to satisfy 1 ≤ a ≤ 1.4, 0.5 ≤ b ≤ 0.9, 0 ≤ c ≤ 0.2, 0 ≤ d ≤ 0.2, 0 ≤ e ≤ 0.67, and 1.7 ≤ e + f ≤ 2. e + f is often 2 or less, and may be 1.94 or less, 1.9 or less, or 1.8 or less. 0 < c/b ≤ 1 may be satisfied.

The composition formula LiₐMn_{b}Co_{c}Mm_{d}OₑF_{f} may satisfy 0.05 ≤ c ≤ 0.1 and 0.15 ≤ (c + d)/b ≤ 1. Furthermore, Ti may account for 50 at% or more of Mn, or even 80 at% or more, or 100%.

As indicated in the above compositional formula, some of the oxygen atoms at the anion sites may be substituted by fluorine atoms. This stabilizes the Li-excess state (a > 1), resulting in high capacity. Additionally, the average discharge potential is increased to further increase the available capacity, as described above.

In order to achieve improved charge-discharge efficiency and high energy density, it is preferable that the crystals of the lithium metal composite oxide (Fm) satisfy at least one of the following conditions (A) and (B) in addition to the above-described conditions. Both conditions (A) and (B) may be satisfied.

Condition (A): The crystallite size of the lithium metal composite oxide (Fm) falls in the range of 1 nm to 200 nm.

Condition (B): The full width at half maximum of the diffraction peak attributed to (200) plane is in the range of 0.1° to 2.5° in terms of 2θ in the X-ray diffraction (XRD) profile of the lithium metal composite oxide (Fm) using CuKα radiation.

When the condition (A) is satisfied, the crystallite size of the lithium metal composite oxide (Fm) may be 100 nm or less, or may be 80 nm or less. Furthermore, the crystallite size of the lithium metal composite oxide is preferably 4 nm or more, and may be 5 nm or more or 6 nm or more. The crystallite size of the lithium metal composite oxide may be 4 nm to 200 nm, 5 nm to 200 nm, 4 nm to 80 nm, or 5 nm to 80 nm. The above upper and lower limits of the crystallite size can be combined arbitrarily.

The lithium metal composite oxide (Fm) may contain two or more particle groups with different crystallite sizes within the range of 1 nm to 200 nm. In other words, the volume-based particle size distribution of crystallite size can have a plurality of peaks. In this case, it is preferable to include at least a particle group with a crystallite size within the range of 10 nm to 200 nm. However, each particle group is a component occupying 10% or more, or 30% or more, of the total volume of the lithium metal composite oxide (Fm). The sum of the total volumes of the respective particle groups accounts for 50% or more of the total volume of the lithium metal composite oxide (Fm).

When the lithium metal composite oxide contains two or more particle groups with different crystallite sizes, it may contain at least a first particle group with a first crystallite size d1 within the range of 10 nm to 200 nm, and a second particle group with a second crystallite size d2 of 30% or less of d1, the range being further limited to 20% or less.

The first particle group appears as a sharp peak in the volume-based particle size distribution of crystallite size. The first crystallite size d1 may be 100 nm or less, or may be 50 nm or less. The first crystallite size d1 may be, for example, 20 nm to 100 nm, or 20 nm to 50 nm or less.

The second particle group appears as a broad peak in the volume-based particle size distribution of crystallite size. The second crystallite size d2 may be 3 nm or more, or may be 4 nm or more. The second crystallite size d2 may be, for example, 3 nm to 10 nm, or 4 nm to 7 nm or less.

Typical lithium metal composite oxides often have an improved capacity when the crystallite size is large and the crystal structure is sufficiently developed. By contrast, lithium metal composite oxides (Fm) having a small crystallite size of 200 nm or less have a large grain boundary area, which is considered to significantly enhance the effect of promoting lithium ion release and absorption, thereby increasing the capacity.

The crystallite size can be calculated based on the Scherrer equation from the full width at half maximum of the diffraction peak attributed to (200) plane in the X-ray diffraction (XRD) profile of the lithium metal composite oxide (Fm) using CuKα radiation. In the X-ray diffraction (XRD) profile of the lithium metal composite oxide (Fm) using CuKα radiation, the full width at half maximum of the diffraction peak attributed to (200) plane may be in the range of 0.1° to 2.5° in terms of 2θ. The full width at half maximum of the sharp peak may be in the range of 0.2° to 0.5°. The full width at half maximum of the broad peak may be in the range of 2.0° to 2.2°.

Examples of preferable conditions for XRD measurement are indicated below.
Goniometer radius: 150 mm
Divergence slit (DS): 1.25°

When the condition (B) is satisfied and the volume-based particle size distribution of crystallite size has a single main peak, the full width at half maximum of the diffraction peak attributed to (200) plane in the X-ray diffraction (XRD) profile of the lithium metal composite oxide (Fm) using CuKα radiation may be 1.0° or less in terms of 2θ, 0.8° or less, or 0.5° or less. The full width at half maximum of the diffraction peak may be 0.2° or more in terms of 2θ, or 0.3° or more. The full width at half maximum of the diffraction peak attributed to (200) plane may be 0.2° to 1.0° in terms of 2θ, or may be 0.3° to 0.8° or 0.3° to 0.5°. The above upper and lower limits of the full width at half maximum can be combined arbitrarily.

A lithium metal composite oxide (Fm) satisfying at least one of the conditions (A) and (B) can be obtained by synthesizing a raw material mixture by sintering (sintering method) at a temperature of, for example, 700°C to 1300°C and pulverizing the resulting sintered product. The crystallite size of the pulverized product can be controlled to 1 nm to 200 nm by appropriate pulverization after sufficiently growing the crystallites by the sintering method. In one aspect, the lithium metal composite oxide (Fm) satisfying at least one of conditions (A) and (B) may be referred to also as a lithium metal composite oxide (Fm) synthesized by the sintering method.

It is considered that by reducing the crystallite size to 200 nm or less, a Li-excess crystal structure similar to the rock-salt structure of belonging to space group Fm-3m exhibits a greater capacity-increasing effect than a crystal structure definitely belonging to space group Fm-3m.

The crystal lattice of the lithium metal composite oxide (Fm) preferably has a lattice constant a of 4.09 Å or more and 4.16 Å or less. In this case, the capacity-increasing effect is prominently obtained. The detailed reason thereof is unclear but it is inferred that when the lattice constant a is within the above range, the crystal structure is likely to be stabilized and the electron tunneling (charge transfer reaction) associated with lithium ion migration between the electrolyte and the active material is likely to be promoted. The above lattice constant a may be 4. 10 Å or more and 4.15 Å or less.

The lattice constant a, which indicates the length of the crystal lattice of the lithium metal composite oxide in the a-axis direction, is determined using the desktop X-ray diffractometer "MiniFlex" and the integrated X-ray powder analysis software "PDXL" each manufactured by Rigaku Corporation. In the X-ray diffraction measurement using the above X-ray diffractometer, the X-ray source is CuKα radiation and the measurement range for 2θ is 10° to 100°.

Note that the lattice constant a determined using the integrated X-ray powder analysis software "PDXL" is followed by a parenthesized numerical value, which indicates an error in the third decimal place. For example, 4.115(2) Å means that the lattice constant a is 4.113 Å or more and 4.117 Å or less. In the present disclosure, the lattice constant a being 4.09 Å or more and 4.16 Å or less means that the lattice constant a is within the range of 4.09 Å or more and 4.16 Å or less with an error in the above range.

Preferably, the lithium metal composite oxide (Fm) is obtained by sintering a mixture of raw materials of the elements constituting the lithium metal composite oxide (Fm). Sintering the raw material mixture can efficiently synthesize the lithium metal composite oxide (Fm) even in mass production of the lithium metal composite oxide (Fm). Sintering promotes the growth of crystals having a structure similar to the rock-salt structure belonging to space group Fm-3m, resulting in a lithium metal composite oxide with a large crystallite size. The particles of the lithium metal composite oxide (Fm) synthesized by sintering are hard and often in the form of aggregated particles. However, the crystallite size thereof can be controlled within the range of 1 nm to 200 nm by pulverization.

When pulverization is performed, the lithium metal composite oxide (Fm) can contain two or more particle groups with different crystallite sizes within the range of 1 nm to 200 nm. Further, the lithium metal composite oxide (Fm) can contain at least a particle group with a crystallite size in the range of 10 nm to 200 nm. In other words, the volume-based particle size distribution of crystallite size has a sharp peak and a broad peak, with the sharp peak originating from the first particle group with the first crystallite size d1 in the range of 10 nm to 200 nm, and the broad peak originating from the second particle group with a smaller second crystallite size d2. Due to having high hardness and being difficult to pulverize so as to achieve uniform crystallite size, it is considered that the lithium metal composite oxide (Fm) is likely to have a particle size distribution such as above. In one aspect, a lithium metal composite oxide (Fm) having a sharp peak and a broad peak in the volume-based particle size distribution of crystallite size may be referred to also as a lithium metal composite oxide (Fm) synthesized by the sintering method.

Currently, there are reports on several examples of lithium metal composite oxides (Fm) synthesized by applying high shear force to a raw material mixture at the laboratory level using a stirring device such as a ball mill without sintering the raw material mixture. However, the lithium metal composite oxides (Fm) synthesized without undergoing sintering of the raw material mixture have a small crystallite size, making it difficult to achieve a crystallite size of 3 nm or more or 5 nm or more. Moreover, it is not possible to provide a sharp peak and a broad peak in the volume-based particle size distribution of crystallite size.

### <Method for Producing Lithium Metal Composite Oxide (Fm)>

As the raw materials of the elements constituting the lithium metal composite oxide, an oxide of Mn, an oxide of Co, an oxide of Ti, an oxide of the element Mm, an oxide of lithium, a lithium salt, lithium manganate (LiMnO₂), lithium titanate, Li₂O, Co₂O₃, TiO₂, or Mn₂O₃ may be used, for example. Lithium fluoride (LiF) can be used as a fluorine source. The types and mixing ratio of the raw materials may be appropriately selected according to the desired composition described above.

The atmosphere for sintering the raw material mixture can vary depending on the composition of a desired lithium metal composite oxide (Fm) and the types of the raw materials, and may be, for example, an inert atmosphere (e.g., in an Ar atmosphere) or an oxidizing atmosphere (e.g., in the air or in the presence of oxygen). It is desirable to circulate the gas in the atmosphere. The raw material mixture may be sintered under stirring. For example, the raw material mixture may be sintered under stirring using a calcination furnace equipped with a fluidized bed.

The temperature for sintering the raw material mixture can vary depending on the composition of a lithium metal composite oxide (Fm) to be obtained and the types of the raw materials, but may be, for example, 700°C or higher, and desirably 900°C or higher and 1300°C or lower.

When the lithium metal composite oxide (Fm) obtained by sintering is in the form of aggregated particles, the aggregated particles may be pulverized. In doing so, a stirring device capable of applying a large shear force to the particles, such as a ball mill or a bead mill, may be used.

Subsequently, a secondary battery according to an embodiment of the present disclosure is described in detail. The secondary battery includes a positive electrode, a negative electrode, an electrolyte, and a separator, examples of which are described below.

### [Positive Electrode]

The positive electrode includes a positive electrode current collector and a positive electrode mixture layer formed on a surface of the positive electrode current collector and containing a positive electrode active material. The positive electrode for secondary batteries described above is used as the positive electrode. The positive electrode mixture layer can be formed, for example, by applying a positive electrode slurry, in which a positive electrode mixture containing a positive electrode active material, a binder, and the like is dispersed in a dispersion medium, to the surface of the positive electrode current collector, followed by drying. The applied film after drying may be rolled, if necessary. The positive electrode mixture layer may be formed on one of the surfaces of the positive electrode current collector, or on both surfaces thereof.

The positive electrode mixture layer contains a positive electrode active material as an essential component and can contain, for example, a binder, a thickener, a conductive agent, and a positive electrode additive as optional components. Known materials can be used as the binder, thickener, and conductive agent.

The positive electrode active material contains the above-described lithium metal composite oxide (Fm) having a crystal structure similar to the rock-salt structure belonging to space group Fm-3m. The lithium metal composite oxide (Fm) is secondary particles formed of aggregation of multiple primary particles, for example. The particle diameter of the primary particles is generally 0.01 µm to 1 µm. The average particle diameter of the secondary particles of the lithium metal composite oxide (Fm) is, for example, 10 µm or less, and may be 1 µm or less, with 0.05 µm to 10 µm or 0.05 µm to 1 µm being preferable. Here, the average particle diameter of the lithium metal composite oxide (Fm) means the median diameter (D50) at which the cumulative frequency is 50% in volume-based particle size distribution, which is measured by laser diffraction particle size distribution measuring device. The diameter (D90) of the lithium metal composite oxide (Fm) at which the cumulative frequency is 90% in volume-based particle size distribution may be 1 µm to 10 µm. Additionally, the diameter (D10) of the lithium metal composite oxide (Fm) at which the cumulative frequency is 10% in volume-based particle size distribution may be 0.03 µm or less.

The BET surface area of the composite oxide is preferably in the range of 0.01 m²/g to 15 m²/g.

The contents of the elements constituting the composite oxide can be measured using inductively coupled plasma atomic emission spectroscope (ICP-AES), electron probe microanalyzer (EPMA), or energy dispersive X-ray spectroscope (EDX), for example.

As the positive electrode active material, another known lithium metal oxide, which is not the lithium metal composite oxide (Fm), may be mixed with the lithium metal composite oxide (Fm) for use. Examples of the other lithium metal oxide include lithium transition metal composite oxides such as LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMePO₄, and Li₂MePO₄F. Here, M is at least one selected from the group consisting of Na, Mg, Sc, Y, Mn, Fe, Co, Ni, Cu, Zn, Al, Cr, Pb, Sb, and B. Me includes at least a transition element (e.g., including at least one selected from the group consisting of Mn, Fe, Co, and Ni). Here, 0 ≤ a ≤ 1.2, 0 ≤ b ≤ 0.9, and 2.0 ≤ c ≤ 2.3. Note that the value "a" indicating the molar ratio of lithium is increased or decreased through charging or discharging.

The shape and thickness of the positive electrode current collector can be selected from the shapes and ranges according to the negative electrode current collector, respectively. Examples of the material of the positive electrode current collector include stainless steel, aluminum, aluminum alloys, and titanium.

### [Negative Electrode]

The negative electrode includes, for example, a negative electrode current collector and may include a negative electrode active material layer formed on a surface of the negative electrode current collector. The negative electrode active material layer can be formed, for example, by applying a negative electrode slurry, in which a negative electrode mixture containing a negative electrode active material, a binder, and the like is dispersed in a dispersion medium, to the surface of the negative electrode current collector, followed by drying. The applied film after drying may be rolled, if necessary. In other words, the negative electrode active material may be a mixture layer. Alternatively, a lithium metal foil or a lithium alloy foil may be attached to the negative electrode current collector. The negative electrode active material layer may be formed on one of the surfaces of the negative electrode current collector or on both surfaces.

The negative electrode active material layer contains a negative electrode active material as an essential component and may contain, for example, a binder, a conductive agent, and a thickener as optional components. Known materials can be used as the binder, conductive agent, and thickener.

The negative electrode active material contains a material that electrochemically absorbs and releases lithium ions, and either or both lithium metal and lithium alloy. Examples of the material that electrochemically absorbs and releases lithium ions include carbon materials and alloy-based materials. Examples of the carbon materials can include graphite, graphitizable carbon (soft carbon), and non-graphitizable carbon (hard carbon). Among these, graphite, which is excellent in stability during charging and discharging and has small irreversible capacity, is preferable. Examples of the alloy-based materials include those containing at least one metal capable of forming an alloy with lithium, such as silicon, tin, silicon alloys, tin alloys, and silicon compounds. A material in which any of the above materials is bonded to oxygen, such as silicon oxide or tin oxide, may be used.

As the alloy-based materials containing silicon, a silicon composite material containing a lithium ion conductive phase and silicon particles dispersed in the lithium ion conductive phase can be used, for example. As the lithium ion conductive phase, a silicon oxide phase and either or both a silicate phase and a carbon phase can be used, for example. The main component (e.g., 95 to 100% by mass) of the silicon oxide phase can be silicon dioxide. Among all, a composite material composed of a silicate phase and silicon particles dispersed in the silicate phase is preferable due to its high capacity and low irreversible capacity.

The silicate phase may include at least one selected from the group consisting of a Group 1 element and a Group 2 element of the long-period periodic table. As the Group 1 element or the Group 2 element of the long-period periodic table, lithium (Li), potassium (K), sodium (Na), magnesium (Mg), calcium (Ca), strontium (Sr), or barium (Ba) can be used, for example. Aluminum (Al), boron (B), lanthanum (La), phosphorus (P), zirconium (Zr), or titanium (Ti) may be included as another element, for example. Among these, a lithium-containing silicate phase (hereinafter, also referred to as a lithium silicate phase) is preferable due to its small irreversible capacity and high initial charge-discharge efficiency.

The lithium silicate phase only needs to be an oxide phase containing lithium (Li), silicon (Si), and oxygen (O), and may contain another element. The atomic ratio: O/Si of O to Si in the lithium silicate phase is larger than 2 and less than 4, for example. Preferably, O/Si is larger than 2 and less than 3. The atomic ratio: Li/Si of Li to Si in the lithium silicate phase is larger than 0 and less than 4, for example. The lithium silicate phase can have a composition represented by the formula: Li_{2z}SiO_{2+z} (0 < z < 2). Preferably, z satisfies the relationship of 0 ≤ z ≤ 1. More preferably, z is 1/2. Examples of the element other than Li, Si, and O which can be contained in the lithium silicate phase include iron (Fe), chromium (Cr), nickel (Ni), manganese (Mn), copper (Cu), molybdenum (Mo), zinc (Zn), and aluminum (Al).

The carbon phase can be composed of non-crystalline carbon having low crystallinity (i.e., amorphous carbon), for example. The non-crystalline carbon may be hard carbon, soft carbon, or any other material, for example.

Examples of the negative electrode current collector that can be used include non-porous conductive substrates (e.g., metal foils) and porous conductive substrates (e.g., meshes, nets, and punched sheets). Examples of the material of the negative electrode current collector include stainless steel, nickel, nickel alloys, copper, and copper alloys.

### [Electrolyte]

The electrolyte may be a liquid electrolyte (electrolyte solution), a gel electrolyte, or a solid electrolyte. The liquid electrolyte is, for example, an electrolytic solution containing a nonaqueous solvent and a salt dissolved in the nonaqueous solvent. The concentration of the salt in the electrolyte solution is 0.5 mol/L or more and 2 mol/L or less, for example. The electrolyte solution may contain a known additive.

The gel electrolyte contains a salt and a matrix polymer, or contains a salt, a nonaqueous solvent, and a matrix polymer. As the matrix polymer, a polymer material that absorbs the nonaqueous solvent to gel is used, for example. Examples of the polymer material include fluorocarbon resin, acrylic resin, polyether resin, and polyethylene oxide.

As the solid electrolyte, a material known in the field of, for example, all-solid-state lithium-ion secondary batteries (e.g., an oxide-based solid electrolyte, a sulfide-based solid electrolyte, or a halide-based solid electrolyte) is used, for example.

For example, the liquid nonaqueous electrolyte is prepared by dissolving a salt in a nonaqueous solvent. The salt is an electrolyte salt that ionically dissociates in the electrolyte and can include, for example, lithium salt. Various additives can be contained in the electrolyte. The electrolyte is usually used in liquid form as it is, but may be in a state in which its fluidity is restricted by a gelling agent or the like.

Examples of the nonaqueous solvent that can be used include cyclic carbonic acid esters, chain carbonic acid esters, cyclic carboxylic acid esters, and chain carboxylic acid esters. Examples of the cyclic carbonic acid esters include propylene carbonate (PC), ethylene carbonate (EC), and vinylene carbonate (VC). Examples of the chain carbonic acid esters include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). Examples of the chain carboxylic acid esters include methyl acetate, ethyl acetate, propyl acetate, methyl propionate (MP), and ethyl propionate (EP). One nonaqueous solvent may be used alone, or two or more nonaqueous solvents may be used in combination.

Other examples of the nonaqueous solvent include cyclic ethers, chain ethers, nitriles such as acetonitrile, and amides such as dimethylformamide.

Examples of the cyclic ethers include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers.

Examples of the chain ethers include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

These solvents may be fluorinated solvents in which some of the hydrogen atoms are substituted by fluorine atoms. As the fluorinated solvent, fluoroethylene carbonate (FEC) may be used.

Examples of the lithium salt that can be used include lithium salts of chlorine-containing acids (e.g., LiClO₄, LiAlCl₄, and LiB₁₀Cl₁₀), lithium salts of fluorine-containing acids (e.g., LiPF₆, LiPF₂O₂, LiBF₄, LiSbF₆, LiAsF₆, LiCF₃SO₃, and LiCF₃CO₂), lithium salts of fluorine-containing acid imides (e.g., LiN(FSO₂)₂, LiN(CF₃SO₂)₂, LiN(CF₃SO₂)(C₄F₉SO₂), and LiN(C₂F₅SO₂)₂), and lithium halides (e.g., LiCl, LiBr, and LiI). One lithium salt may be used alone, or two or more lithium salts may be used in combination.

The concentration of the lithium salt in the electrolyte may be 1 mol/liter or more and 2 mol/liter or less, or 1 mol/liter or more and 1.5 mol/liter or less. As a result of the lithium salt concentration being controlled within the above range, an electrolyte having excellent ionic conductivity and moderate viscosity can be obtained. However, the lithium salt concentration is not limited to the above.

The electrolyte may contain another known additive. Examples of the additive include 1,3-propanesultone, methylbenzenesulfonate, cyclohexylbenzene, biphenyl, diphenyl ether, and fluorobenzene.

### [Separator]

The separator is provided between the positive electrode and the negative electrode. The separator is excellent in ion permeability and has moderate mechanical strength and insulating properties. For example, a microporous thin film, woven fabric, or nonwoven fabric can be used as the separator. A preferable material of the separator is, for example, polyolefin such as polypropylene or polyethylene.

One example of the configuration of the secondary battery is a configuration in which an electrode group including the positive electrode and the negative electrode wound together with the separator therebetween, and a nonaqueous electrolyte are housed in an outer case. Alternatively, instead of the wound electrode group, an electrode group with a different configuration may be adopted, such as a stacked electrode group formed by stacking the positive electrode and the negative electrode with the separator therebetween. The secondary battery may have any of various shapes, including cylindrical, prismatic, coin, button, or laminate shapes.

FIG. 1 is a schematic partially cutaway perspective view of a prismatic secondary battery according to one embodiment of the present disclosure.

The battery includes a bottomed prismatic battery case 4 and an electrode group 1 and nonaqueous electrolyte (not illustrated) housed in the battery case 4. The electrode group 1 includes an elongated band-shaped negative electrode, an elongated band-shaped positive electrode, and a separator provided therebetween. The negative electrode current collector of the negative electrode is electrically connected via a negative electrode lead 3 to a negative electrode terminal 6 provided on a sealing plate 5. The negative electrode terminal 6 is insulated from the sealing plate 5 by a resin-made gasket 7. The positive electrode current collector of the positive electrode is electrically connected to the back surface of the sealing plate 5 via a positive electrode lead 2. That is, the positive electrode is electrically connected to the battery case 4 serving also as a positive electrode terminal. The periphery of the sealing plate 5 is fitted to the open end of the battery case 4, and the fitting portion is laser welded. The sealing plate 5 has an injection hole for the nonaqueous electrolyte, which is closed by a sealing plug 8 after liquid injection.

The secondary battery may be, for example, of cylindrical type, coin type, or button type provided with a metal-made battery case, or may be a laminate-type battery provided with a battery case made of a laminated sheet which is a laminate of a barrier layer and a resin sheet. In the present disclosure, the type, shape, and other features of the secondary battery are not particularly limited.

### (Supplemental Note)

According to the above description of the embodiments, the following techniques are disclosed.

### (Technique 1)

A positive electrode active material for secondary batteries containing a lithium metal composite oxide having a crystal structure assignable to space group Fm-3m, wherein the lithium metal composite oxide contains Li and a cationic element M different from Li, the cationic element M includes at least Mn and Co, and Mn accounts for 50 at% or more of the cationic element M.

### (Technique 2)

The positive electrode active material for secondary batteries according to Technique 1, wherein a ratio (mMn/mCo) of a number mMn of atoms of Mn in the lithium metal composite oxide to a number mCo of atoms of Co in the lithium metal composite oxide is 5 to 65.

### (Technique 3)

The positive electrode active material for secondary batteries according to Technique 1 or 2, wherein the cationic element M includes an element Mn, and the Mn includes at least one selected from the group consisting of Ti, Fe, Ge, Si, Ga, Ni, Sn, Cu, Nb, Mo, Bi, V, Cr, Y, Zr, Zn, Na, K, Ca, Mg, Pt, Au, Ag, Ru, Ta, W, La, Ce, Pr, Gd, Sm, Eu, Yb, Dy, Al, and Er.

### (Technique 4)

The positive electrode active material for secondary batteries according to Technique 3, wherein at least one selected from the group consisting of Ti, Mg, and Fe accounts for 50 at% or more of the Mm.

### (Technique 5)

The positive electrode active material for secondary batteries according to Technique 3 or 4, wherein Ti accounts for 50 at% or more of the Mm.

### (Technique 6)

The positive electrode active material for secondary batteries according to any one of Techniques 1 to 5, wherein a ratio (mTi/mCo) of a number mTi of atoms of Ti in the lithium metal composite oxide to a number mCo of atoms of Co in the lithium metal composite oxide is 1 to 3.

### (Technique 7)

The positive electrode active material for secondary batteries according to any one of Techniques 3 to 6, wherein the lithium metal composite oxide is represented by a compositional formula LiₐMn_{b}Co_{c}Mm_{d}OₑF_{f}, and 1 ≤ a ≤ 1.4, 0.5 ≤ b ≤ 0.9, 0 ≤ c ≤ 0.2, 0 ≤ d ≤ 0.2, 0 ≤ e ≤ 0.67, and 1.7 ≤ e + f ≤ 2 are satisfied.

### (Technique 8)

The positive electrode active material for secondary batteries according to Technique 7, wherein 0.05 ≤ c ≤ 0.1 and 0.15 ≤ (c + d)/b ≤ 1 are satisfied, and
Ti accounts for 50 at% or more of the Mm.

### (Technique 9)

The positive electrode active material for secondary batteries according to any one of Techniques 1 to 8, wherein a crystallite size of the lithium metal composite oxide is 1 nm to 200 nm,
or
in an X-ray diffraction (XRD) profile of the lithium metal composite oxide using CuKα radiation, a full width at half maximum of a diffraction peak attributed to (200) plane is in a range of 0.1° to 2.5° in terms of 2θ.

### (Technique 10)

The positive electrode active material for secondary batteries according to Technique 9, wherein the crystallite size is 100 nm or less.

### (Technique 11)

The positive electrode active material for secondary batteries according to Technique 9 or 10, wherein the crystallite size is 80 nm or less.

### (Technique 12)

The positive electrode active material for secondary batteries according to any one of Techniques 9 to 11, wherein the crystallite size of the lithium metal composite oxide is 3 nm or more.

### (Technique 13)

A secondary battery including:
a positive electrode; a negative electrode; an electrolyte; and a separator provided between the positive electrode and the negative electrode,
wherein the positive electrode contains the positive electrode active material for secondary batteries according to any one of Techniques 1 to 12.

Hereinafter, the present disclosure will be described further in detail based on examples and comparative examples. However, the present disclosure is not limited to the following examples.

### <Examples 1 to 12>

### [Positive Electrode Production]

Manganese oxide (Mn₂O₃), lithium carbonate (Li₂CO₃), titanium oxide (TiO₂), lithium fluoride (Lif), and cobalt oxide (CoO or Co₃O₄) or LiCoO₂ were mixed in the starting compositions that yields the compositions shown in Tables 1 and 2. The resulting mixtures were sintered at 950°C for 10 hours to obtain lithium metal composite oxides (Fm).

The lithium metal composite oxides (Fm) after the sintering were pulverized under various conditions. The conditions changed were the rotation speed (150 to 500 rpm herein) and processing time. As an example, the lithium metal composite oxide (Fm) A1 is explained. The lithium metal composite oxide (Fm) after the sintering was placed in a planetary ball (Premium-Line P7 manufactured by FRITSCH GmbH, rotation speed: 300 rpm, container: 45 mL, balls: φ3-mm Zr balls), and treated in a dry air atmosphere at room temperature for 12 hours (24 cycles of 0.5-hour operation followed by a 5-minute pause) to obtain a powder of the lithium metal composite oxide (Fm).

With respect to each of the obtained lithium metal composite oxides (Fm), measurement and analysis of the X-ray diffraction pattern were performed using X-ray powder diffractometer using CuKα radiation to confirm from the number and positions of XRD peaks that a lithium metal composite oxide (Fm) having a crystal structure based on the rock-salt type belonging to space group Fm-3m has been formed. Further, in the X-ray diffraction pattern, a sharp diffraction peak and a broad diffraction peak attributed to the (200) plane were observed, with the full width at half maximum being 0.2° to 0.5° for the sharp peak and 2.0° to 2.2°for the broad peak. The crystallite size was determined from the full widths at half maximum based on the Scherrer equation to be 20 to 65 nm for the sharp peak and 3 to 9 nm for the broad peak. The lattice constant a of the lithium metal composite oxide (Fm) determined by the aforementioned method was found to be 4.09 to 4.16 Å.

A positive electrode slurry was prepared by mixing one of the resulting lithium metal composite oxides (Fm), acetylene black, and polyvinylidene fluoride in a solid mass ratio of 7:2:1, while using N-methyl-2-pyrrolidone (NMP) as a dispersion medium. Next, the positive electrode slurry was applied onto a positive electrode current collector formed of an aluminum foil. The applied film was dried, compressed, and then cut to a predetermined electrode size to obtain a positive electrode.

### [Electrolyte Preparation]

A nonaqueous electrolyte was prepared by adding LiPF₆ as a lithium salt to a mixed solvent obtained by mixing ethylene carbonate (EC), ethyl methyl carbonate (EMC), and dimethyl carbonate (DMC) in a predetermined volume ratio.

### [Test Cell Fabrication]

A test cell was fabricated with the above-described positive electrode and a negative-electrode counter electrode formed of a lithium metal foil. The positive electrode and the negative-electrode counter electrode were arranged so as to face each other with a separator interposed therebetween to form an electrode body, which was then housed in a coin-shaped outer can. After injecting the electrolyte into the outer can, the outer can was sealed to obtain a coin-shaped test secondary battery.

### [Evaluation]

### (Initial Discharge Capacity)

Constant current charge was performed on each of the secondary batteries at a constant current of 0.1 C in a room-temperature environment until the battery voltage reached 4.95 V, followed by constant voltage charge at 4.95 V until the current reached 0.01 C. Then, the charge capacity was measured. After a 20-minute pause thereafter, constant current discharge was performed at a constant current of 0.1 C until the battery voltage reached 2.5 V. Then, the discharge capacity was measured. The respective discharge capacities per mass of the lithium metal composite oxides (Fm) are shown in the tables. The measurement by the same method was performed up to three times, and the average value was calculated. The results are shown in the Tables 1 and 2.

### <Comparative Examples 1 to 10>

Manganese oxide (Mn₂O₃), lithium carbonate (Li₂CO₃), titanium oxide (TiO₂), and an oxide of the metal M1 (M1 = Mg, Ca, Zn, Fe, Cr, Al, Ni, Zr, Nb, or Si) were mixed in the starting compositions shown in Table 1. The resulting mixtures were sintered at 950°C for 10 hours to obtain lithium metal composite oxides (Fm). Secondary batteries were fabricated and evaluated in the same manner as in Example 1 except for the above. The results are shown in Table 1.

**[Table 1]**

| | Starting composition | | | | Type of M1 | Discharge capacity (mAh/g) |
|---|---|---|---|---|---|---|
| | Li | Mn | Ti | M | | |
| A1 | 1.22 | 0.61 | 0.125 | 0.05 | Co | 260 |
| B1 | 1.22 | 0.61 | 0.125 | 0.05 | Mg | 208 |
| B2 | 1.22 | 0.61 | 0.125 | 0.05 | Ca | 202 |
| B3 | 1.22 | 0.61 | 0.125 | 0.05 | Zn | 203 |
| B4 | 1.22 | 0.61 | 0.125 | 0.05 | Fe | 235 |
| B5 | 1.22 | 0.61 | 0.125 | 0.05 | Cr | 241 |
| B6 | 1.22 | 0.61 | 0.125 | 0.05 | Al | 240 |
| B7 | 1.22 | 0.61 | 0.125 | 0.05 | Ni | 246 |
| B8 | 1.22 | 0.61 | 0.125 | 0.05 | Zr | 237 |
| B9 | 1.22 | 0.61 | 0.125 | 0.05 | Nb | 251 |
| B10 | 1.22 | 0.61 | 0.125 | 0.05 | Si | 210 |

As understood from Table 1, the initial discharge capacity is significantly improved when a lithium metal composite oxide (Fm) contains Co as compared with those containing the other metal elements.

**[Table 2]**

| | Starting composition | Charge capacity (mAh/g) | Discharge capacity (mAh/g) |
|---|---|---|---|
| A2 | Li_{1.16}Mn_{0.58}Ti_{0.17}Co_{0.10}O_{1.88} | 334 | 262 |
| A3 | Li_{1.18}Mn_{0.59}Ti_{0.17}Co_{0.052}O_{1.87} | 360 | 268 |
| A4 | Li_{1.20}Mn_{0.56}Ti_{0.16}Co_{0.08}O_{1.88} | 342 | 272 |
| A5 | Li_{1.21}Mn_{0.58}Ti_{0.17}Co_{0.04}O_{1.88} | 367 | 278 |
| A6 | Li_{1.21}Mn_{0.58} Ti_{0.17}Co_{0.02}Fe_{0.02}O_{1.88} | 340 | 262 |
| A7 | Li_{1.21}Mn_{0.58}Ti_{0.17}Co_{0.02}Ni_{0.02}O_{1.88} | 339 | 268 |
| A8 | Li_{1.21}Mn_{0.58}Ti_{0.17}Co_{0.01}Ni_{0.02}Fe_{0.01}O_{1.88} | 347 | 266 |
| A9 | Li_{1.21}Mn_{0.58}Ti_{0.17}Co_{0.02}Al_{0.03}O_{1.88} | 342 | 263 |
| A10 | Li_{1.20}Mn_{0.59}Ti_{0.17}Co_{0.02}Ca_{0.03}O_{1.88} | 322 | 251 |
| A11 | Li_{1.18}Mn_{0.58}Ti_{0.17}Co_{0.02}Mg_{0.05}O_{1.88} | 329 | 254 |
| A12 | Li_{1.19}Mn_{0.63}Ti_{0.17}Co_{0.01}O_{1.88}F_{0.02} | 311 | 244 |

### <Example 13 and Comparative Examples 13 and 14>

Manganese oxide (Mn₂O₃), lithium carbonate (Li₂CO₃), and an oxide of the metal M2 (M2 = Co, Mg, or Fe) were mixed in the starting compositions that yields the compositions shown in Table 3. The resulting mixtures were sintered at 950°C for 10 hours to obtain lithium metal composite oxides (Fm). Secondary batteries were fabricated and evaluated in the same manner as in Example 1 except for the above. The results are shown in Table 3.

**[Table 3]**

| | Starting composition | | | Type of M2 | Discharge capacity (mAh/g) |
|---|---|---|---|---|---|
| | Li | Mn | M2 | | |
| A13 | 1.0 | 0.75 | 0.25 | Co | 140 |
| B13 | 1.0 | 0.75 | 0.25 | Mg | 110 |
| B14 | 1.0 | 0.75 | 0.25 | Fe | 40 |

As understood from Table 3, the initial discharge capacity is significantly improved when a lithium metal composite oxide (Fm) contains Co as compared with those containing the other metal elements.

### <Examples 14 to 18>

Manganese oxide (Mn₂O₃), lithium carbonate (Li₂CO₃), lithium fluoride (Lif), and cobalt oxide (CoO or Co₃O₄) or LiCoO₂ were weighed in the starting compositions that yields the compositions shown in Table 4, placed in a planetary ball (Premium-Line P7 manufactured by FRITSCH GmbH, rotation speed: 600 rpm, container: 45 mL, balls: φ3-mm Zr balls), and treated in an Ar atmosphere at room temperature for 35 hours (35 cycles of 1-hour operation followed by a 10-minute pause) to obtain powders of the lithium metal composite oxides (Fm). Thereafter, secondary batteries were fabricated and evaluated in the same manner as in Example 1 except for the above. The results are shown in Table 4.

**[Table 4]**

| | Starting composition | Charge capacity (mAh/g) | Discharge capacity (mAh/g) |
|---|---|---|---|
| A14 | Li_{1.15}Mn_{0.75}Co_{0.05}O_{1.7}F_{0.3} | 347 | 299 |
| A15 | Li_{1.10}Mn_{0.80}Co_{0.05}O_{1.7}F_{0.3} | 320 | 270 |
| A16 | Li_{1.20}Nb_{0.70}Co_{0.05}O_{1.7}F_{0.3} | 362 | 301 |
| A17 | Li_{1.2}Mn_{0.7}Co_{0.05}O_{1.55}F_{0.45} | 358 | 304 |
| A18 | Li_{1.1}Mn_{0.8}Co_{0.05}O_{1.45}F_{0.55} | 349 | 288 |

### [Industrial Applicability]

With the positive electrode active material for secondary batteries according to the present disclosure, a secondary battery with high energy density can be provided. The secondary battery according to the present disclosure is useful as a main power source for mobile communication devices and portable electronic devices, for example.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

1: Electrode group, 2: Positive electrode lead, 3: Negative electrode lead, 4: Battery case, 5: Sealing plate, 6: Negative electrode terminal, 7: Gasket, 8: Sealing plug

## Claims

1. A positive electrode active material for secondary batteries, comprising
a lithium metal composite oxide having a crystal structure assignable to space group Fm-3m,
wherein the lithium metal composite oxide contains Li and a cationic element M different from Li,
the cationic element M includes at least Mn and Co, and
Mn accounts for 50 at% or more of the cationic element M.

2. The positive electrode active material for secondary batteries according to claim 1,
wherein a ratio (mMn/mCo) of a number mMn of atoms of Mn in the lithium metal composite oxide to a number mCo of atoms of Co in the lithium metal composite oxide is 5 to 65.

3. The positive electrode active material for secondary batteries according to claim 1,
wherein the cationic element M includes an element Mn, and
the Mn includes at least one selected from the group consisting of Ti, Fe, Ge, Si, Ga, Ni, Sn, Cu, Nb, Mo, Bi, V, Cr, Y, Zr, Zn, Na, K, Ca, Mg, Pt, Au, Ag, Ru, Ta, W, La, Ce, Pr, Gd, Sm, Eu, Yb, Dy, Al, and Er.

4. The positive electrode active material for secondary batteries according to claim 3,
wherein at least one selected from the group consisting of Ti, Mg, and Fe accounts for 50 at% or more of the Mm.

5. The positive electrode active material for secondary batteries according to claim 4,
wherein Ti accounts for 50 at% or more of the Mm.

6. The positive electrode active material for secondary batteries according to claim 5,
wherein a ratio (mTi/mCo) of a number mTi of atoms of Ti in the lithium metal composite oxide to a number mCo of atoms of Co in the lithium metal composite oxide is 1 to 3.

7. The positive electrode active material for secondary batteries according to claim 6,
wherein the lithium metal composite oxide is represented by a compositional formula LiₐMn_{b}Co_{c}Mm_{d}OₑF_{f}, and
1 ≤ a ≤ 1.4, 0.5 ≤ b ≤ 0.9, 0 ≤ c ≤ 0.2, 0 ≤ d ≤ 0.2, 0 ≤ e ≤ 0.67, and 1.7 ≤ e + f ≤ 2 are satisfied.

8. The positive electrode active material for secondary batteries according to claim 7,
wherein 0.05 ≤ c ≤ 0.1 and 0.15 ≤ (c + d)/b ≤ 1 are satisfied, and
Ti accounts for 50 at% or more of the Mm.

9. The positive electrode active material for secondary batteries according to claim 1,
wherein a crystallite size of the lithium metal composite oxide is 1 nm to 200 nm,
or
in an X-ray diffraction (XRD) profile of the lithium metal composite oxide using CuKα radiation, a full width at half maximum of a diffraction peak attributed to (200) plane is in a range of 0.1° to 2.5° in terms of 20.

10. The positive electrode active material for secondary batteries according to claim 9,
wherein the crystallite size is 100 nm or less.

11. The positive electrode active material for secondary batteries according to claim 9,
wherein the crystallite size is 80 nm or less.

12. The positive electrode active material for secondary batteries according to claim 9,
wherein the crystallite size of the lithium metal composite oxide is 3 nm or more.

13. A secondary battery comprising:
a positive electrode; a negative electrode; an electrolyte; and a separator provided between the positive electrode and the negative electrode,
wherein the positive electrode contains the positive electrode active material for secondary batteries according to any one of claims 1 to 12.
